Europäisches Patentamt

European Patent Office

Office européen des brevets

(11) Numéro de publication: **0 203 905**
A2

## (12) DEMANDE DE BREVET EUROPEEN

(21) Numéro de dépôt: **86870073.3**

(51) Int. Cl.⁴: **B 24 B 9/10,** B 24 B 41/06

(22) Date de dépôt: **27.05.86**

(30) Priorité: **28.05.85 BE 215081**

(43) Date de publication de la demande: **03.12.86**
**Bulletin 86/49**

(84) Etats contractants désignés: **BE DE FR GB IT LU NL**

(71) Demandeur: **S.A. Glaceries de Saint-Roch, Rue des Glaces Nationales, 169, B-5700 Sambreville (BE)**

(72) Inventeur: **Bauwens, Christian, Rue de l'Hotel de Ville, 2, B-5781 Mornimont (BE)**

(74) Mandataire: **Plucker, Guy et al, OFFICE KIRKPATRICK 4 Square de Meeûs, B-1040 Bruxelles (BE)**

(54) Dispositif à dépression pour le maintien du verre, notamment dans les machines de façonnage.

(57) L'invention concerne le maintien de plaques de verre pendant qu'on les travaille, au moyen d'un dispositif à dépression. Elle propose un dispositif qui comporte au moins une platine traversée par au moins un alésage branché sur une source de vide, ladite platine ayant au moins une prise de vide qui relie l'alésage à sa surface, qui comporte également au moins une embase percée axialement, surmontée d'une lèvre annulaire souple, ladite embase se fixant sur la platine de façon étanche par sa face opposée à la lèvre souple, son perçage axial en coïncidence avec la prise de vide. L'invention s'applique en particulier dans les machines de façonnage de plaques de verre et permet des adaptations rapides desdites machines à des plaques de verre de forme différente.

La présente invention concerne le maintien de plaques de verre pendant qu'on travaille leur bord ou leur surface, au moyen d'un dispositif à dépression.

Elle s'applique en particulier au maintien de plaques de verre pendant qu'on façonne leur bord.

Il existe des machines de façonnage capables d'effectuer un travail très précis sur le bord de plaques de verre, mais il importe que les plaques de verre, soient à la fois positionnées avec précision et maintenues fermement. En effet, pendant ces opérations de façonnage, les plaques de verre peuvent être soumises à des poussées importantes de la meule de façonnage, poussées qui sont susceptibles de déplacer les plaques de verre si elles ne sont pas solidement maintenues.

Dans les autres opérations, qu'on peut effectuer sur des plaques de verre, telles la découpe, le décor, etc., un maintien est également exigé, mais l'éventuelle poussée des outils de travail est bien inférieure à la poussée que peut exercer une meule de façonnage. Le dispositif de maintien proposé par l'invention, pourra donc également être employé pour ces autres opérations, sans toutefois que cet emploi soit absolument aussi nécessaire que dans une machine de façonnage.

Il est connu que pour de telles machines de façonnage, on peut maintenir des plaques de verre par une pluralité de ventouses, montées chacune sur un pied vissé dans le bâti de la machine de façonnage, et alimentées en vide, chacune par une tuyauterie indépendante débouchant au travers du disque de la dite ventouse. Dans certains cas, le disque de la ventouse est monté pivotant sur son pied et le pied est réglable en hauteur. La disposition des ventouses est telle qu'elles sont réparties sur la surface des plaques de verre à travailler.

Lorsque le modèle de plaque de verre à travailler change, la modification du trajet de la meule est facile à obtenir, en particulier dans les machines à commande numérique, mais il faut modifier le nombre et/ou l'emplacement des ventouses et cette opération qui a priori paraît simple, est en fait la principale source de problèmes et constitue, de beaucoup, la plus importante des pertes de temps. En effet, non seulement il faut supprimer ou ajouter des ventouses, mais il faut en même temps supprimer ou ajouter les tuyauteries de vide de chaque ventouse. En outre, à force d'être montées et démontées, ces tuyauteries et également leurs raccords et leurs joints, s'abîment et sont la cause de mauvais fonctionnements et de pannes qui nécessitent des interventions de personnel et constituent donc des pertes de temps supplémentaires. Par ailleurs, chaque ventouse indépendante, doit être réglée en hauteur séparément et il est difficile, et de toute façon long et fastidieux, à chaque modification du nombre et de l'emplacement des ventouses, lorsqu'il est prévu de passer au façonnage d'un modèle différent de plaque de verre, d'obtenir une parfaite isoplanéité de tous les disques de ventouses sans compter les risques élevés de déréglages. Cette isoplanéité est encore plus difficile à obtenir lorsque les lèvres périphériques des ventouses coiffent simplement les disques des dites ventouses sans autre moyen de maintien qui leur assure en permanence une position correcte. Dans certains cas, ces lèvres sont collées sur les disques par des colles dont l'épaisseur varie d'une ventouse à l'autre, ce qui rend encore plus compliqué le réglage des ventouses.

La présente invention vise à résoudre ces problèmes de l'art antérieur de façon à fournir dans des machines de travail de plaques de verre et, en particulier, dans des machines de façonnage, un dispositif de maintien des plaques de verre par dépression qui soit facile à adapter à de nouveaux modèles de plaques de verre, qui ne se détériore pas à la suite de multiples adaptations de ce genre, qui procure sans réglages fastidieux, un support parfaitement plan pour les plaques de verre et qui bien sûr, les maintienne fortement.

Elle propose pour cela un dispositif de maintien par dépression comportant au moins une platine traversée par au moins un alésage apte à être branché sur une source de vide, la dite platine ayant au moins une prise de vide qui relie l'alésage à sa surface, comportant également au moins une embase percée axialement, surmontée d'une lèvre annulaire souple, se fixant sur la platine de façon étanche par sa face opposée à la lèvre souple, son perçage axial en coïncidence avec la prise de vide.

Des bouchons sont alors prévus pour la ou les éventuelles prises de vide non chapeautées par une embase à lèvre annulaire.

Suivant un mode de réalisation avantageux, chaque embase se fixe sur une prise de vide de la platine par une vis percée axialement, s'engageant dans le perçage de l'embase et se vissant dans un pas de vis taraudé dans la prise de vide.

Avantageusement, un joint torique logé dans une rainure annulaire de l'embase est disposé autour du perçage de la dite embase de façon à réaliser l'étanchéité entre platine et embase.

Avantageusement également, pour permettre un meilleur maintien de la lèvre souple formant ventouse, ainsi éviter sa détérioration et assurer qu'elle reste toujours parfaitement plane, la dite lèvre est insérée dans une rainure annulaire tracée à l'intérieur de la face supérieure de l'embase de façon telle que la dite lèvre soit maintenue en place aussi bien du côté interne que du côté externe, sans collage et sans surépaisseur, et ne se déforme pas sous l'effet d'une poussée latérale.

De préférence, les bouchons prévus pour fermer les prises de vide non utilisées sont constitués par des embases de moindre épaisseur que celles munies d'une lèvre annulaire souple, et sont fixées sur les prises de vide par des vis non percées axialement.

Dans une machine de façonnage on pourra employer une pluralité de platines, chacune reliées à une source de vide, chaque platine étant équipée de plusieurs embases avec lèvres annulaires souples, réparties sur la surface des plaques de verre à maintenir, les prises de vide des platines débouchant en dehors de la surface des plaques de verre étant fermées par des bouchons.

L'invention sera maintenant décrite plus en détail en référence aux figures jointes qui représentent :

Fig. 1 : un ensemble de ventouses assurant la fixation de plaques de verre, tel qu'il existe dans l'art antérieur;

Fig. 2 : une vue schématique de dessus du dispositif à dépression selon l'invention, et

Fig. 3 : une vue éclatée du dispositif à dépression selon l'invention.

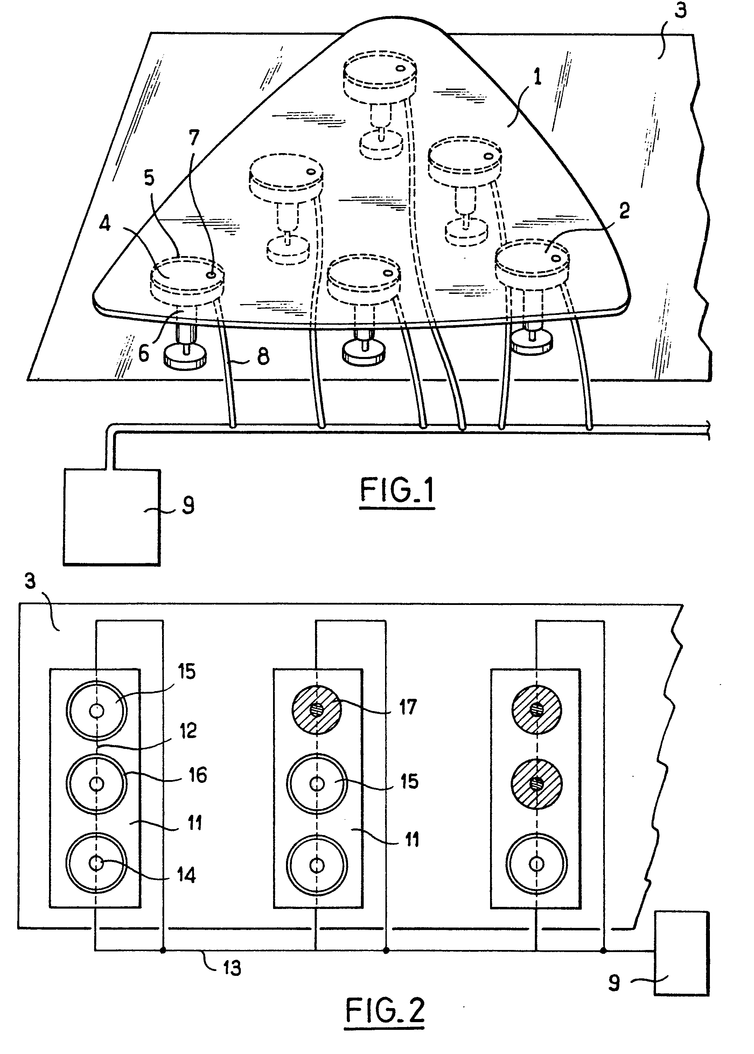

La Fig. 1 montre un système de maintien des plaques de verre 1 selon l'art antérieur dans une machine de travail des dites plaques de verre, en particulier une machine de façonnage de leur bord. Ce système comporte essentiellement une pluralité de ventouses telles que 2 fixées sur le bâti 3 de la machine, notamment de façonnage. Chaque ventouse 2 possède un disque 4 bordé d'une lèvre souple 5 et un pied 6 réglable en hauteur, par lequel elle est fixée sur le bâti 3. Chaque disque 4 est percé d'un orifice 7 relié par une tuyauterie individuelle 8 à une source de vide 9. Comme il ressort du schéma de la Fig. 1, toute suppression ou ajout d'une ventouse 2 nécessite aussi un démontage ou un montage de la tuyauterie 8 arrivant à la ventouse 2 concernée.

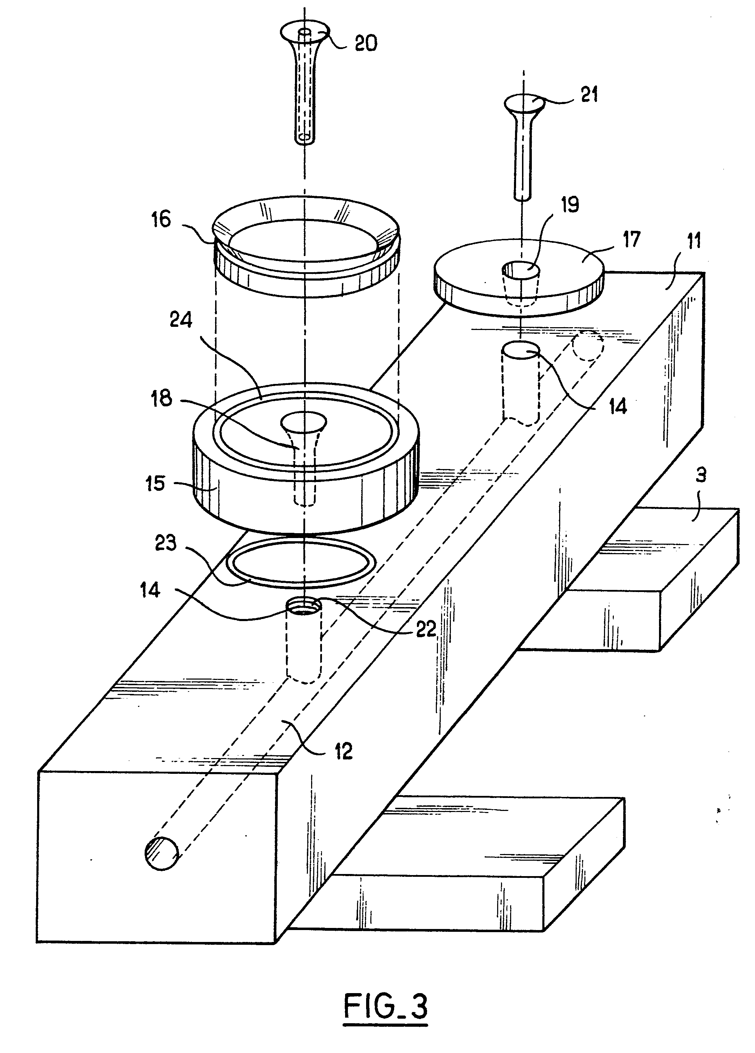

L'invention propose une dispositif de maintien à dépression montré sur les Fig. 2 et 3. Ce dispositif comporte au moins une platine 11 fixée sur le bâti 3 de la machine, par exemple par vissage. Cette platine 11 est traversée de part en part par au moins un alésage 12 branché sur la source de vide 9 par une tuyauterie 13 et elle est percée à partir de sa surface supérieure, de conduits qui rencontrent l'alésage 12 et qui constituent des prises de vide 14. Chaque prise de vide 14 est apte à recevoir soit une embase 15 munie d'une lèvre souple annulaire 16, soit un bouchon 17 constitué d'une simple embase sans lèvre, avantageusement d'épaisseur moindre que celle de l'embase 15 pour permettre le passage des outils de travail du verre, en particulier une meule de façonnage non représentée. L'embase 15 et le bouchon 17 sont percés d'un orifice axial 18, 19 qui vient en communication avec la prise de vide 14 et qui permet l'introduction d'une vis 20, 21 pour la fixation de la dite embase 15 et/ou du bouchon 17 sur la platine 11, un pas de vis 22 étant taraudé dans la paroi des prises de vide 14. Pour la fixation d'embases 15 équipées d'une lèvre souple 16, les vis 20 sont percées en leur centre, de façon à permettre la transmission du vide; par contre pour la fixation des bouchons 17, il s'agit de vis 21 pleines qui obturent les prises de vide 14. L'orifice axial 18 de chaque embase 15 est évasé ou fraisé à sa partie supérieure pour que la tête de la vis 20 y soit suffisamment enfoncée, de façon à en dégager l'orifice axial, même en cas de présence d'une plaque de verre et permettre ainsi l'extraction d'air à l'intérieur du volume délimité par la face supérieure de l'embase 15, la lèvre souple 16 et la face inférieure d'une plaque de verre. La profondeur de l'évasement est réalisée en fonction de ce même volume.

Avantageusement, pour que l'étanchéité soit parfaitement réalisée à la jonction entre la platine 11 et les embases 15, un joint torique 23 est intercalé entre la dite platine 11 et chaque embase, joint torique disposé autour des orifices axiaux 18 et par exemple partiellement encastré dans une rainure pratiquée dans la face inférieure de chaque embase 15. Un joint torique identique peut également être prévu pour assurer l'étanchéité des bouchons 17.

Avantageusement pour que la lèvre supérieure 16 ne se déforme pas sous la poussée latérale des plaques de verre, pour qu'elle ne se dégrade pas prématurément, elle possède un pied qui est encastré dans une rainure 24 taillée à l'intérieur de la face supérieure des embases 15 et non pas à la limite de la dite face supérieure comme dans l'art antérieur.

Les platines 11 et embases 15 sont nécessairement en un matériau indéformable, par exemple en métal. Les bouchons 17 pourront également être du même matériau bien qu'il soit possible de les réaliser en un caoutchouc rigide ou équivalent, le seul impératif étant pour eux qu'ils assurent de façon étanche l'obturation des prises de vide 14 non utilisées et le maintien en état de propreté de la portion de surface de platine qu'ils recouvrent.

Le plus souvent chaque platine comporte plusieurs prises de vide 14 et pour le maintien de plaques de verre de dimensions moyennes plusieurs platines peuvent être nécessaires. Les prises de vide inscrites dans le contour de la plaque de verre à travailler sont ou peuvent être équipées d'une embase 15 avec lèvre 16 tandis que les autres prises de vide reçoivent simplement un bouchon 17.

Les platines 11 et les embases 15 étant toutes d'une part respectivement de même épaisseur, d'autre part en un matériau indéformable, la planéité du support fourni par toutes les embases 15 est automatiquement assurée sans qu'il y ait le moindre réglage à effectuer. Des jeux d'embases 15 et de platines 11 calibrées à différentes épaisseurs permettent d'adapter le dispositif de maintien à différentes machines ou à différentes conditions de travail.

Les adaptations du dispositif de maintien à de nouveaux modèles de plaques de verre s'obtiennent facilement et rapidement par simple vissage d'embases 15 supplémentaires à la place de bouchons 17 ou vice versa, et cela sans aucun risque de fuite et sans détérioration du matériel. En outre, lorsqu'il est nécessaire de modifier les conditions de travail sur une machine, il suffit de remplacer un jeu d'embases 15 par un autre jeu, d'épaisseur calibrée différente.

En outre, les lèvres 16 qui ont leur pied bien enserré dans une rainure 24 ne se déforment plus, ne s'échappent plus, donc ne se détériorent plus et n'ont plus besoin d'être collées.

Enfin, la large base de l'embase s'appliquant sur la surface de la platine, confère au dispositif une excellente tenue aux vibrations.

L'invention permet donc de profiter totalement des avantages des machines nouvelles dans lesquelles les programmes qui déterminent le trajet des outils de travail peuvent être modifiés très rapidement pour s'adapter à de nouveaux modèles, l'adaptation des moyens de maintien du verre à ces nouveaux modèles se faisant également très rapidement.

Dans l'exemple de réalisation décrit, les plaques de verre sont horizontales et maintenues par leur face inférieure, mais l'invention englobe aussi les systèmes ayant des embases équipées de lèvres annulaires aptes à saisir des plaque de verre horizontales par leur face supérieure, ou des plaques de verre verticales ou obliques.

0203905

R E V E N D I C A T I O N S
-------------------------------

1.- Dispositif de maintien par dépression de plaques de verre pendant qu'on les travaille, caractérisé en ce qu'il comporte au moins une platine traversée par au moins un alésage branché sur une source de vide, la dite platine ayant au moins une prise de vide qui relie l'alésage à sa surface, en ce qu'il comporte également au moins une embase rigide percée axialement, surmontée d'une lèvre annulaire souple, la dite embase, dotée de moyens d'étanchéité, se fixant sur la platine par sa face opposée à la lèvre annulaire souple, son perçage axial en coïncidence avec la prise de vide.

2.- Dispositif de maintien selon la revendication 1, caractérisé en ce que chaque embase est fixée sur une prise de vide de la platine par une vis percée axialement traversant l'embase et se vissant dans un pas de vis taraudé dans la prise de vide de la platine.

3.- Dispositif de maintien selon la revendication 2, caractérisé en ce que le perçage de chaque embase est évasé ou fraisé à son arrivée sur la face de l'embase qui porte la lèvre de façon à dégager l'orifice de la tête de la dite vis percée, même lorsqu'une plaque de verre est pressée sur la lèvre, et à permettre ainsi l'extraction de l'air dans le volume délimité par la face supérieure de l'embase, la lèvre et la plaque de verre, la profondeur de l'évasement du dit perçage étant fonction des dimensions du dit volume.

4.- Dispositif de maintien selon une quelconque des revendications 1, 2 et 3, caractérisé en ce que l'embase comporte, sur sa face supérieure, une rainure annulaire dans laquelle la lèvre annulaire souple est enserrée, de façon telle que la dite lèvre est maintenue en place à la fois du côté interne et du côté externe et ne se déforme pas sous l'effet d'une poussée latérale.

5.- Dispositif de maintien selon une quelconque des revendications précédentes, caractérisé en ce que les moyens d'étanchéité interposés entre l'embase et la platine qui la porte, comprennent un joint torique entourant la prise de vide et le perçage axial de l'embase.

6.- Dispositif de maintien selon une quelconque des revendications précédentes, caractérisé en ce que des bouchons sont prévus pour la ou les éventuelles prises de vide non surmontées d'une embase à lèvre annulaire.

7.- Dispositif de maintien selon la revendication 6, caractérisé en ce que les bouchons sont des embases du même type que celles équipées d'une lèvre annulaire, mais fixées sur une prise de vide avec une vis non percée.

8.- Dispositif de maintien selon une quelconque des revendications 6 et 7, caractérisé en ce que les bouchons sont d'une épaisseur moindre que celle des embases équipées d'une lèvre.

9.- Application de dispositifs selon l'une des revendications précédentes, au maintien des plaques de verre dans une machine de façonnage, plusieurs platines étant employées et les prises de vide des différentes platines inscrites dans le contour des plaque de verre, pouvant être équipées d'embases avec lèvre annulaire, les autres étant fermées par un bouchon.

0203905

## FIG.1

## FIG.2

FIG_3